# EUROPEAN PATENT APPLICATION

(11) **EP 3 726 606 A1**
(43) Date of publication of application: **21.10.2020**
(21) Application number: 17934730.7
(22) Date of filing: 13.12.2017
(51) Int. Cl.: H01M 2/06, H01M 2/02, H01M 2/04, H01M 10/04

(54) **SECONDARY BATTERY**

(71) Applicant: Samsung SDI Co., Ltd., Gyeonggi-do 17084 (KR)
(72) Inventor: KIM, Dae Kyu, Yongin-si Gyeonggi-do 17084 (KR); KIM, Shin Jung, Yongin-si Gyeonggi-do 17084 (KR)
(74) Representative: Shearman, James Ward
(86) International application number: PCT/KR2017/014640
(87) International publication number: WO 2019/117345

(57) **Abstract**

Disclosed is a secondary battery comprising: an electrode assembly including a first electrode, a second electrode, and a separator interposed therebetween; a can in which the electrode assembly and an electrolyte are received; a cap assembly for sealing the can; and a washer disposed between the can and the can assembly and including at least one moisture-blocking film layer and reinforcing film layer.

## Description

### TECHNICAL FIELD

The present disclosure relates to a secondary battery, and more particularly, to a washer for a secondary battery and a cylindrical secondary battery including the same.

### BACKGROUND ART

In general, unlike a primary battery that is not chargeable, a secondary battery can be charged and discharged. A low-capacity secondary battery is used for various small portable electronic devices such as mobile phones or camcorders, and a high-capacity secondary battery having several tens of cells connected to one another is used as a power source for driving a motor of an electric bicycle, an electric scooter, a hybrid car or an electric car.

Secondary batteries may be manufactured in various shapes, representatively including a prismatic shape, a cylindrical shape, and a pouch-type shape. The secondary battery is formed such that an electrode assembly and an electrolyte are received together in a can or a case, and a cap assembly is then installed on the can or the case. In addition, the secondary battery may further include a washer coupled to a top portion of the cap plate. Meanwhile, since an end of the can or the case of the secondary battery is vulnerable to rust generation, and thus it is necessary to suppress the rust generation and there exists a need for blocking moisture.

### DESCRIPTION OF EMBODIMENTS

### TECHNICAL PROBLEM

The present invention is contrived to solve the above-mentioned problem and provides a secondary battery including a washer capable of blocking moisture entering a secondary battery can and suppressing corrosion of a metal surface.

### SOLUTION TO PROBLEM

According to an embodiment of the present disclosure, provided is a secondary battery comprising: an electrode assembly including a first electrode, a second electrode, and a separator interposed therebetween; a can in which the electrode assembly and an electrolyte are received; a cap assembly for sealing the can; and a washer disposed between the can and the can assembly and including at least one of a moisture-blocking film layer and a reinforcing film layer.

In an embodiment, the moisture-blocking film layer may include high-density polyethylene, and the reinforcing film layer may include oriented polypropylene.

In an embodiment, the washer capable of suppressing corrosion of a metal surface may include a polypropylene film layer, an acryl pressure sensitive adhesive (PSA) layer and an anti-rusting film layer, and the anti-rusting film layer may include a first layer including the moisture-blocking film layer, a second layer including the reinforcing film layer, and a third layer including an anti-rusting agent and a dehumidifying agent.

Preferably, the anti-rusting film layer is constructed such that the second layer is stacked on the third layer and the first layer is stacked on the second layer, the acryl PSA layer is stacked on the anti-rusting film layer, and the polypropylene film layer is stacked on the acryl PSA layer.

Preferably, the can is a cylindrical can including an opening and the secondary battery is a cylindrical secondary battery. The secondary battery may further include a crimping part formed on an upper portion of the outer circumferential surface of the cylindrical can and formed by a portion of the top opening of the can inwardly bent, for coupling the cylindrical can and the cap assembly to each other; and a gasket interposed between the cylindrical can and the cap assembly, and the washer may cover boundaries between each of the crimping part, the gasket and the cap assembly.

### ADVANTAGEOUS EFFECTS OF DISCLOSURE

As described above, the secondary battery according to example embodiments of the present disclosure may prevent current from being applied to positive and negative electrodes thereof, blocking moisture infiltration and preventing corrosion from occurring to the can using a washer including a moisture-blocking film.

In addition, the secondary battery according to example embodiments of the present disclosure can suppress the can from rusting using a washer including an anti-rusting film layer containing an anti-rusting agent.

### BRIEF DESCRIPTION OF DRAWINGS

FIGS. 1A, 1B and 1C are a perspective view, a cross-sectional view and an exploded perspective view of a cylindrical secondary battery according to an embodiment of the present disclosure.
FIG. 2 is an enlarged cross-sectional view illustrating a region 2 of FIG. 1B.
FIG. 3 is a perspective view of a washer according to an embodiment of the present disclosure.
FIG. 4 illustrates a cross section of the washer, taken along the line A-A of FIG. 3.
FIGS. 5A and 5B illustrate comparative graphs of water vapor transmission rates of various insulating materials and water vapor transmission rates of single- and multi-layer washers according to the present invention.
FIG. 6 illustrates a comparative graph of rust generation rates in washers according to embodiments of the present disclosure and a conventional washer.

### MODE OF DISCLOSURE

Hereinafter, example embodiments of the present disclosure will be described in detail.

Various embodiments of the present disclosure may be embodied in many different forms and should not be construed as being limited to the example embodiments set forth herein. Rather, these example embodiments of the disclosure are provided so that this disclosure will be thorough and complete and will convey inventive concepts of the disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the element or feature in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

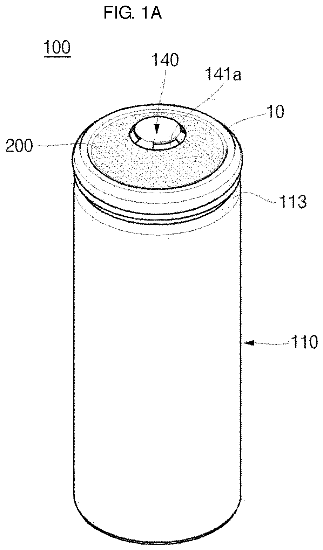

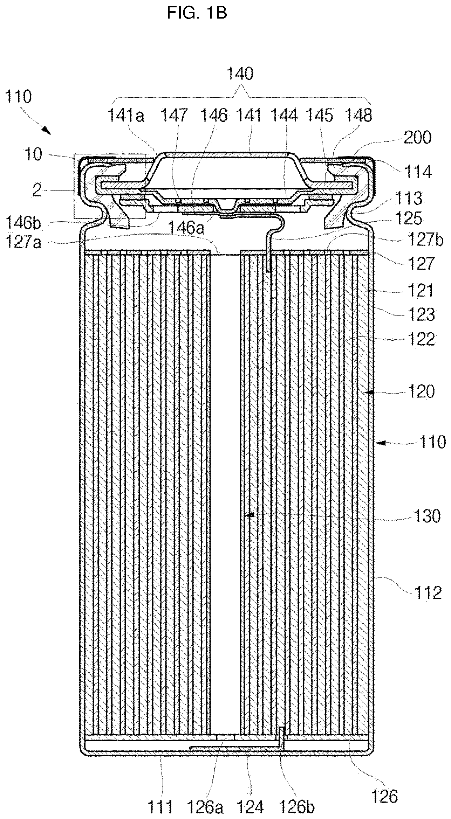

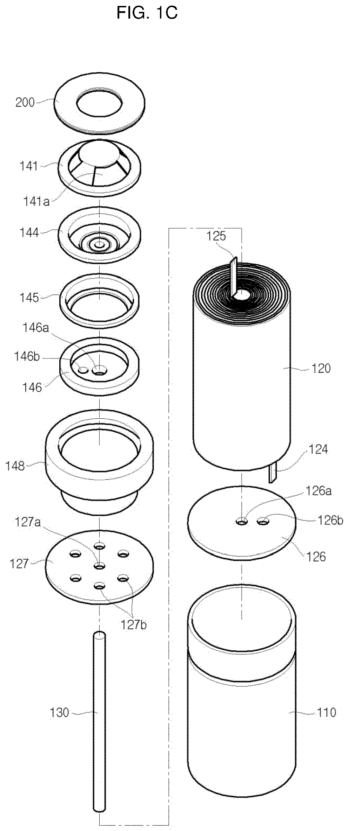

Referring to FIGS. 1A, 1B and 1C, a perspective view, a cross-sectional view and an exploded perspective view of a cylindrical lithium ion secondary battery 100 according to an embodiment are illustrated.

As illustrated in FIGS. 1A to 1C, the cylindrical lithium ion secondary battery 100 according to an embodiment includes a cylindrical can 110, an electrode assembly 120, a center pin 130, a cap assembly 140, and a washer 200.

The cylindrical can 110 includes a cylindrical bottom portion 111, and a side portion 112 upwardly extending a predetermined length from the bottom portion 111. During the manufacture of the secondary battery, an upper portion of the cylindrical can 110 is in an open state. Therefore, the electrode assembly 120, the center pin 130 and an electrolyte may be inserted into the cylindrical can 110 together in the course of assembling the secondary battery. The cylindrical can 110 may be made of steel, stainless steel, aluminum, an aluminum alloy or equivalents thereof, but embodiments of the present disclosure are not limited to the above materials. In addition, the cylindrical can 110 includes an inwardly recessed beading part 113 formed at a lower portion of the cap assembly 140 to prevent the cap assembly 140 from being deviated to the outside, and an inwardly bent crimping part 114 formed at an upper portion of the cap assembly 140.

The electrode assembly 120 may be received in the cylindrical can 110. The electrode assembly 120 may include a negative electrode plate 121 coated with a negative electrode active material (e.g., graphite, carbon, etc.), a positive electrode plate 122 coated with a positive electrode active material (e.g., a transition metal oxide, such as LiCoO₂, LiNiO₂, LiMn₂O₄, etc.), and a separator 123 positioned between the negative electrode plate 121 and the positive electrode plate 122 to prevent an electric short and allowing only movement of lithium ions. The negative electrode plate 121, the positive electrode plate 122 and the separator 123 are wound up in a substantially cylindrical shape. Here, the negative electrode plate 121 may be made of a copper (Cu) foil, and the positive electrode plate 122 may be made of an aluminum (Al) foil, and the separator 123 may be made of polyethylene (PE) or polypropylene (PP), but embodiments of the present disclosure are not limited to the above materials. In addition, a negative electrode tab 124 projected downwardly and extending with a predetermined length may be welded to the negative electrode plate 121 and a positive electrode tab 125 projected upwardly with a predetermined length may be welded to the positive electrode plate 122, and vice versa. In addition, the negative electrode tab 124 may be made of nickel (Ni) and the positive electrode tab 125 may be made of aluminum (Al), but embodiments of the present disclosure are not limited to the above materials.

In addition, the negative electrode tab 124 of the electrode assembly 120 may be welded to the bottom portion 111 of the cylindrical can 110. Therefore, the cylindrical can 110 may function as a negative electrode. To the contrary, the positive electrode tab 125 may be welded to the bottom portion 111 of the cylindrical can 110, and in this case, the cylindrical can 110 may function as a positive electrode.

In addition, a first insulating plate 126 coupled to the cylindrical can 110 and having a first hole 126a formed at its central portion and a second hole 126b formed at its exterior side may be interposed between the electrode assembly 120 and the bottom portion 111. The first insulating plate 126 prevents the electrode assembly 120 from electrically contacting the bottom portion 111 of the cylindrical can 110. In particular, the first insulating plate 126 prevents the positive electrode plate 122 of the electrode assembly 120 from electrically contacting the bottom portion 111. Here, when a large amount of gas is generated due to abnormality of the secondary battery, the first hole 126a allows the gas to rapidly move upwardly through the center pin 130, and the second hole 126b allows the negative electrode tab 124 to pass through the same to be welded to the bottom portion 111.

In addition, a second insulating plate 127 coupled to the cylindrical can 110 and having a first hole 127a formed at its central portion and a plurality of second holes 127b formed at its exterior side may be interposed between the electrode assembly 120 and the cap assembly 140. The second insulating plate 127 prevents the electrode assembly 120 from electrically contacting the cap assembly 140. In particular, the second insulating plate 127 prevents the negative electrode plate 121 of the electrode assembly 120 from electrically contacting the cap assembly 140. Here, when a large amount of gas is generated due to abnormality of the secondary battery, the first hole 127a allows the gas to rapidly move to the cap assembly 140, and the second holes 127b allow the positive electrode tab 125 to pass through the same to be welded to the cap assembly 140. In addition, in an electrolyte injection process, the second holes 127b allow the electrolyte to rapidly flow into the electrode assembly 120.

In addition, since diameters of the first holes 126a and 127a of the first and second insulating plates 126 and 127 are smaller than a diameter of the center pin 130, it is possible to prevent the center pin 130 from electrically contacting the bottom portion 111 of the case 110 or the cap assembly 140 due to an external shock.

The center pin 130 is shaped of a hollow cylindrical pipe and is coupled to a substantially central portion of the electrode assembly 120. The center pin 130 may be made of steel, stainless steel, aluminum, an aluminum alloy, or polybutylene terephthalate, but embodiments of the present disclosure are not limited to the above materials. The center pin 130 prevents the electrode assembly 120 from being deformed during charging or discharging of the secondary battery, and may serve as a gas movement path. In some cases, the center pin 130 may not be provided.

The cap assembly 140 includes a cap-up 141 having a plurality of through-holes 141a, a safety plate 144 installed under the cap-up 141, an insulating plate 145 installed under the safety plate 144, a cap-down 146 installed under and having first and second through-holes 146a and 146b, a sub-plate 147 fixed to a lower portion of the cap-down 146 and electrically connected to the positive electrode tab 125, and a gasket 148 insulating the cap-up 141, the safety plate 144, the insulating plate 145 and the cap-down 146 from the side portion 112 of the cylindrical can 110.

Here, the gasket 148 is pressed substantially between the beading part 113 and the crimping part 114, each of which are formed at the side portion 112 of the cylindrical can 110. In addition, the through-holes 141a, 146a and 146b formed in the cap-up 141 and the cap-down 146 may allow internal gas generated in the cylindrical can 110 to be discharged to the outside when an abnormal internal pressure is reached. In this case, the safety plate 144 upwardly inverts due to the internal pressure to be electrically separated from the sub-plate 147 and is then broken or ruptured to allow the internal gas to be discharged to the outside.

Additionally, an electrolyte (not shown) is injected into the cylindrical can 110, and lithium ions generated by an electrochemical reaction in the negative electrode plate 121 and the positive electrode plate 122 in the secondary battery during charging and discharging are allowed to move. The electrolyte may be a non-aqueous, organic electrolyte including a mixture of a lithium salt and a high-purity organic solvent. In addition, the electrolyte may be a polymer using a polymer electrolyte or a solid electrolyte. However, embodiments of the present disclosure are not limited to the above electrolytes.

In addition, the washer 200 may be disposed between the crimping part 114 and an end of the cylindrical can 110 and between the crimping part 114 and the gasket 148, and may be generally shaped of a circular plate so as to be mounted on the cap assembly 140 while surrounding the cap-up 141 of the cap assembly 140. The washer 200 functions to prevent current from being applied to the positive and negative electrodes, that is, the cylindrical can 110 and the cap assembly 140, from a top end of the secondary battery 100.

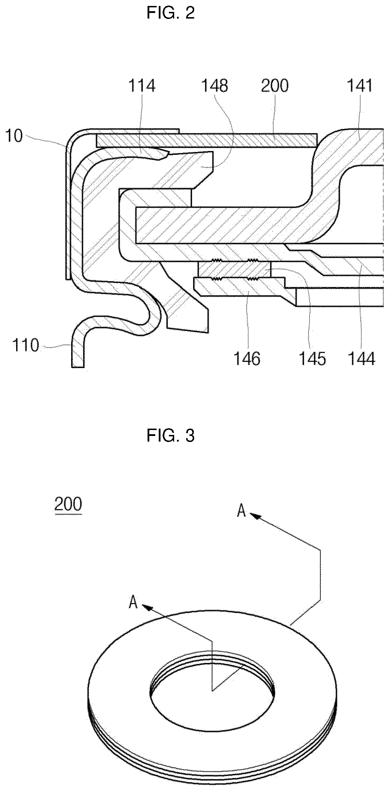

FIG. 2 is an enlarged cross-sectional view illustrating a region 2 of FIG. 1B.

Referring to FIG. 2, the washer 200 may be placed on an upper end of the crimping part 114 while covering the cap-up 141 of the cap assembly 140 and may be fixed to the cylindrical can 110 using a thermally shrinkable tube 10. In addition, the washer 200 is configured to cover boundaries of the crimping part 114, the gasket 148 and the cap assembly 140. Additionally, the washer 200 may be formed of an insulating film to insulate the cap assembly 140 and the cylindrical can 110 from each other.

One end of the gasket 148 is further outward positioned than one end of the can 110.

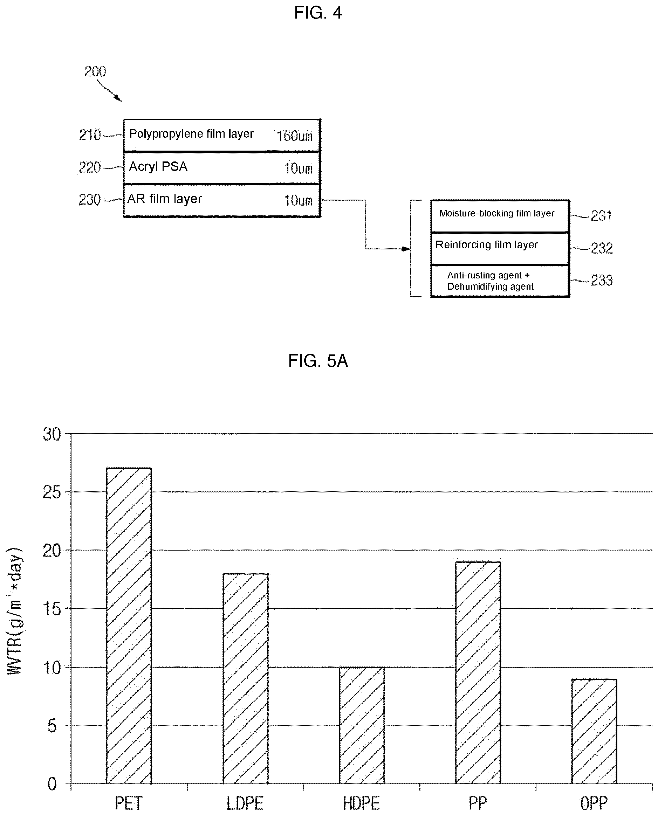

FIG. 3 is a perspective view of a washer according to an embodiment, and FIG. 4 illustrates a cross section of the washer, taken along the line A-A of FIG. 3.

Referring to FIGS. 3 and 4, the washer 200 according to an embodiment includes a polypropylene film layer 210, an acryl pressure sensitive adhesive (PSA) layer 220 and an anti-rusting (AR) film layer 230 disposed sequentially from above in that order.

The polypropylene film layer 210 has a thickness of approximately 160 µm, the acryl PSA layer 220 has a thickness of approximately 10 µm, and the AR film layer 230 has a thickness of approximately 80 µm. In an example, the washer 200 is configured such that the polypropylene film layer 210 and the AR film layer 230 are adhered to each other by the AR film layer 220.

In addition, the AR film layer 230 includes a first layer 231, a second layer 232 and a third layer 233.

The first layer 231 functions to suppress moisture from infiltrating into the moisture-blocking film layer. The first layer 231 includes high-density polyethylene (HDPE).

The second layer 232 is a flexibility reinforcing film for reinforcing flexibility of the first layer 231 as a moisture-blocking film layer. The second layer 232 includes oriented polypropylene (OPP).

The third layer 233 includes an anti-rusting agent and a dehumidifying agent.

The AR film layer 230 is preferably configured such that the second layer 232 is stacked on the third layer 233 and the first layer 231 is stacked on the second layer 232. Accordingly, from a cross-sectional view of the washer 200, the third layer 233, the second layer 232, the first layer 231, the acryl PSA layer 220, and the polypropylene film layer 210 are stacked sequentially from below in that order.

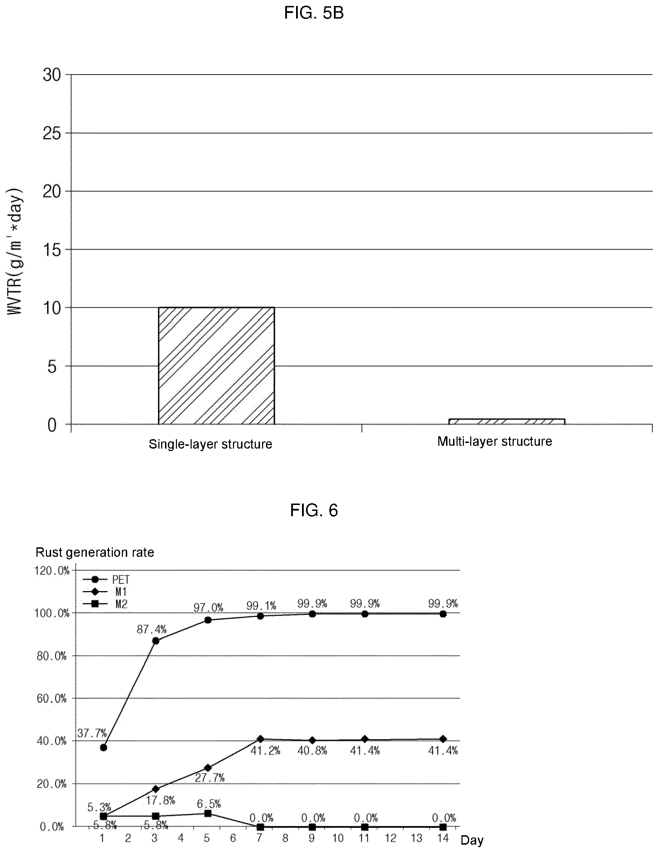

FIGS. 5A and 5B illustrate comparative graphs of water vapor transmission rates of various insulating materials used in a general washer, and water vapor transmission rates of a washer having a single-layer structure and a washer having a multi-layer structure according to an embodiment of the present disclosure.

Referring to FIG. 5A, an insulating material used in a general washer, such as PP or PET has a considerably high water vapor transmission rate (WVTR). By contrast, high-density polyethylene (HDPE) or oriented polypropylene (OPP) has a lower WVTR than PP or PET.

In addition, FIG. 5B illustrates comparative graphs of water vapor transmission rates in cases of a washer using a single material and a washer having a multi-layer structure like in an embodiment of the present disclosure. As illustrated in FIG. 5B, the multi-layered washer according to the present disclosure has a noticeably lower WVTR than the washer made of a single material or a single-layer structure.

That is to say, since the washer 200 according to an embodiment is implemented by a multi-layer structure, instead of a single-layer structure, it is confirmed that the WVTR of a complex material used in the washer 200 having a multi-layer structure is much higher than that of a single material.

FIG. 6 is a graph for comparison of rust generation rates of washers according to embodiments of the present disclosure and a conventional washer.

In the graph of FIG. 6, the X-axis indicates days, and the Y-axis indicates rust generation rates (%). Referring to FIG. 6, in a case of the conventional washer made of PET, the rust generation rate on day 5 was approximately 97%, and the rust generation rate on and after day 9 was approximately 99.9%. By contrast, in cases of the washers M1 and M2 according to embodiments, even after day 14, the rust generation rates ranged from a maximum rate of 41.4% (M1) to a minimum rate of 0% (M2). Here, the embodiments of M1 and M2 differ from each other with respect to the anti-rusting agent content, and the anti-rusting agent content is higher in M2 than M1.

As illustrated in FIG. 6, it was confirmed that the rust generation rate was greatly reduced using the washers according to the present disclosure, compared to the conventional single-layered washer made of PET, and the experimental result showed that no rust generation rate was found, irrespective of the anti-rusting agent content.

As described above, the secondary battery according to example embodiments of the present disclosure may prevent current from being applied to positive and negative electrodes thereof, blocking moisture infiltration and preventing corrosion from occurring to the can using a washer including a moisture-blocking film.

In addition, since the washer according to an example embodiment is implemented by a multi-layer structure, instead of a single-layer structure, the WVTR of a complex material used in the washer having a multi-layer structure is much higher than that of a single material.

Although the foregoing embodiments have been described to practice the secondary battery of the present disclosure, these embodiments are set forth for illustrative purposes and do not serve to limit the disclosure. Those skilled in the art will readily appreciate that many modifications and variations can be made, without departing from the spirit and scope of the disclosure as defined in the appended claims, and such modifications and variations are encompassed within the scope and spirit of the present disclosure.

### INDUSTRIAL APPLICABLITY

The secondary battery according to the present disclosure can be used in in portable small electronic devices such as mobile phones or camcorders and as power sources of electric bikes, electric scooters, hybrid automobiles or electric vehicles.

## Claims

1. A secondary battery comprising:
an electrode assembly including a first electrode, a second electrode, and a separator interposed therebetween;
a can in which the electrode assembly and an electrolyte are received;
a cap assembly for sealing the can; and
a washer disposed between the can and the can assembly and including at least one of a moisture-blocking film layer and a reinforcing film layer.

2. The secondary battery of claim 1, wherein the moisture-blocking film layer includes high-density polyethylene.

3. The secondary battery of claim 2, wherein the reinforcing film layer includes oriented polypropylene.

4. The secondary battery of claim 1, wherein the can is a cylindrical can including an opening, and the secondary battery is a cylindrical secondary battery.

5. The secondary battery of claim 1, wherein the washer includes a polypropylene film layer, an acryl pressure sensitive adhesive (PSA) layer and an anti-rusting film layer, and the anti-rusting film layer includes a first layer including the moisture-blocking film layer and a second layer including the reinforcing film layer.

6. The secondary battery of claim 5, wherein the anti-rusting film layer includes a third layer including an anti-rusting agent and a dehumidifying agent.

7. The secondary battery of claim 6, wherein the anti-rusting film layer is constructed such that the second layer is stacked on the third layer and the first layer is stacked on the second layer, the acryl PSA layer is stacked on the anti-rusting film layer, and the polypropylene film layer is stacked on the acryl PSA layer.

8. The secondary battery of claim 4, further comprising:
a crimping part formed on an upper portion of the outer circumferential surface of the cylindrical can and formed by a portion of the top opening of the can inwardly bent, for coupling the cylindrical can and the cap assembly to each other; and
a gasket interposed between the cylindrical can and the cap assembly,
wherein the washer covers boundaries between each of the crimping part, the gasket and the cap assembly.
